# FASCICULE DE BREVET EUROPEEN

(11) **EP 1 454 081 B1**
(45) Date de publication et mention de la délivrance du brevet: **31.08.2005**
(21) Numéro de dépôt: 02804597.9
(22) Date de dépôt: 06.12.2002
(51) Int. Cl.: F16H 25/14, F16H 53/06

(54) **DISPOSITIF DE GUIDAGE A CAME ET INSTALLATION DE MOULAGE EN FAISANT APPLICATION**
NOCKENBETÄTIGTE FÜHRUNGSVORRICHTUNG UND DIESE VERWENDENDE FORMANLAGE
CAM-OPERATED GUIDING DEVICE AND MOULDING INSTALLATION USING SAME

(30) Priorité: 12.12.2001 FR 0116030
(43) Date de publication de la demande: 08.09.2004
(73) Titulaire: SIDEL, 76930 Octeville-sur-Mer (FR)
(72) Inventeur: EVRARD, Alain, F-76930 Octeville-sur-Mer (FR)
(74) Mandataire: Gorrée, Jean-Michel
(86) Numéro de dépôt international: PCT/FR2002/004213
(87) Numéro de publication internationale: WO 2003/050438

(56) Documents cités:
- EP-A- 0 935 920
- GB-A- 829 519
- US-A- 3 304 791

## Description

La présente invention concerne des perfectionnements apportés aux dispositifs de guidage à came pour la commande d'un mouvement annexe d'un organe par ailleurs entraîné en déplacement continu, ledit dispositif comportant deux cames parallèles, mutuellement décalées transversalement, avec lesquelles coopèrent respectivement deux galets coaxiaux pour un guidage bilatéral du susdit organe.

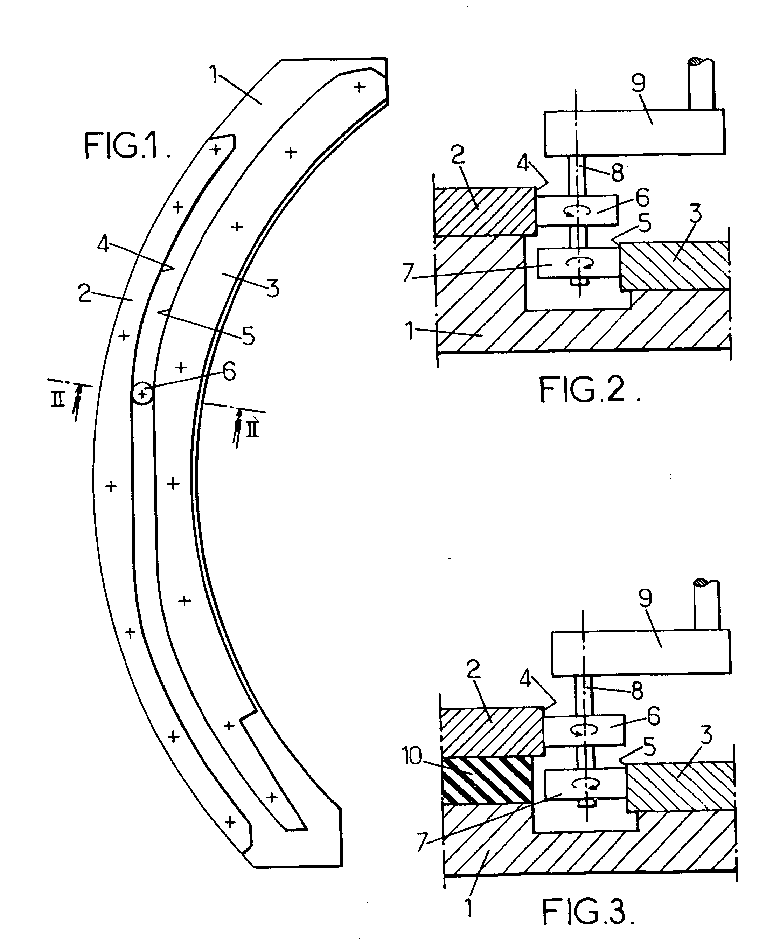

Pour mieux fixer les idées, un dispositif du genre considéré est illustré aux figures 1 et 2 des dessins annexés qui sont respectivement une vue de dessus du dispositif de guidage et une vue partielle du même dispositif montré en coupe transversale selon la ligne II-II de la figure 1. Sur une embase commune 1 sont fixées deux pièces allongées 2 et 3, en général en acier, dont les bords en vis-à-vis, respectivement 4 et 5, ont un profil longitudinal curviligne en même temps qu'ils sont parallèles l'un à l'autre. Ces bords formant cames sont destinés à guider positivement, par contact bilatéral, un galet. Un galet unique ne pouvant pas, toutefois, être en contact simultané avec les deux bords 4 et 5 formant came, il est prévu de décaler transversalement les deux cames 4 et 5 l'une par rapport à l'autre et de mettre en oeuvre deux galets 6 et 7 montés sur le même axe 8 et en contact respectivement avec les cames 4 et 5, l'axe 8 étant porté par l'organe 9 à guider ou par un accessoire de l'organe à guider.

De tels dispositifs de guidage trouvent une application notamment, mais non exclusivement, dans les installations mobiles, notamment tournantes, de moulage à moules portefeuille pour la fabrication, par soufflage ou étirage-soufflage, de récipients, notamment de bouteilles, en polyester thermoplastique, notamment en PET, à partir d'une préforme chauffée, lesdites installations comportant un dispositif de guidage à cames et galets pour la commande de l'ouverture et de la fermeture desdits moules portefeuille en même temps que ceux-ci sont entraînés en déplacement continu.

Dans les installations du genre indiqué, en général agencées sous forme d'un carrousel tournant regroupant plusieurs, voire plusieurs dizaines de moules portefeuille, les dispositifs de guidage à cames et galets utilisés pour la commande d'ouverture et de fermeture des moules ont donné toute satisfaction tant que la cadence de production des récipients (et donc la vitesse de fonctionnement de l'installation) restait inférieure à un certain seuil.

Toutefois, des problèmes sont apparus lorsqu'on a voulu augmenter la vitesse de fonctionnement de l'installation pour accroître la cadence de production des récipients en réponse à une demande des utilisateurs : l'installation est devenue bruyante et il est survenu des dysfonctionnements non seulement mécaniques, mais aussi électriques ou électroniques dont l'origine n'a pu être déterminée.

Finalement, des mesures des efforts instantanés développés au niveau des contacts cames/galets ont révélé que les efforts effectifs étaient considérablement plus élevés (de l'ordre de dix fois) que ceux estimés.

Ensuite de quoi, il a pu être constaté que, pour les vitesses plus élevées que l'on souhaitait pratiquer, les galets ne restaient pas en appui continu contre les cames, mais que cet appui s'accompagnait d'un phénomène de rebond initié par l'entrée en contact trop brutale des galets avec les cames. Or, les deux cames face à face sont fixées rigidement sur une embase commune et définissent entre elles un passage n'offrant qu'un jeu minimum pour les deux galets coaxiaux et contrarotatifs de chaque paire de galets.

C'est donc la conjonction de ce phénomène de rebond apparaissant significativement et du jeu minimum, insuffisant, entre les cames qui engendre des vibrations se propageant dans l'installation et à l'origine des bruits et des dysfonctionnements constatés.

Au surplus, plusieurs moules successifs sont commandés simultanément alors qu'ils sont dans des phases de fonctionnement différentes. Les cames sont donc de grande longueur et plusieurs paires de galets sont engagées simultanément à leur contact. Les rebonds successifs des paires de galets consécutives finissent par engendrer un phénomène de résonance qui aggrave encore les inconvénients précités.

Le document US-A-3 304 791 révèle les éléments selon le préambule de la revendication indépendante 1.

L'invention a essentiellement pour but de remédier aux inconvénients constatés à ce jour et de proposer un agencement perfectionné propre à conduire à un fonctionnement stable et régulier qui n'est plus générateur de vibrations et qui, au surplus, autorise d'accroître encore plus la vitesse de fonctionnement de l'installation.

A ces fins, un dispositif de guidage tel que mentionné au préambule se caractérise, étant agencé conformément à l'invention, en ce qu'une des cames est montée par l'intermédiaire de moyens élastiquement déformables propres à autoriser un déplacement élastique de ladite came par rapport à l'autre came.

Grâce à cet agencement, la came montée élastiquement est apte à encaisser le choc d'entrée en contact avec le galet et le phénomène de rebond est sinon éliminé, tout au moins fortement atténué et rapidement amorti. On élimine, ou au moins on atténue de façon importante les vibrations dans l'installation qui de ce fait devient moins bruyante.

Dans un mode de réalisation préféré, les moyens élastiquement déformables comprennent une semelle en un matériau élastiquement déformable, notamment en élastomère, interposée entre ladite came et une embase de support sur laquelle l'autre came est montée de façon fixe. Mais, bien entendu, d'autres solutions techniques sont envisageables ; par exemple on peut prévoir que la came soit fixée à une embase de support par des organes de vissage avec interposition de manchons respectifs élastiquement déformables entre lesdits organes de vissage et des alésages respectifs de l'embase.

Pour éviter le phénomène de résonance dû à l'engagement simultané de plusieurs paires de galets avec les deux cames, il est avantageux que ladite came montée élastiquement soit constituée sous forme de plusieurs tronçons de came disposés bout à bout, le nombre de ces tronçons étant au moins égal au nombre des galets susceptibles d'être engagés simultanément au contact de ladite came et la longueur des tronçons de came étant choisie, en relation avec l'intervalle séparant des galets successifs, de manière que chaque tronçon de came monté élastiquement ne reçoive l'appui que d'un seul galet. Ainsi chaque tronçon de came est mécaniquement désolidarisé du ou des tronçons adjacents et subit l'effacement élastique qui lui est imposé par le seul galet qui est à son contact, sans interférence avec les galets situés en amont et en aval.

Pour éviter qu'il puisse se produire un décalage entre les extrémités adjacentes de deux tronçons successifs et qu'il en résulte un choc et donc une vibration se traduisant par un bruit, lors du passage d'un galet, on prévoit d'assurer la continuité de la surface sur laquelle s'appuie le galet par le fait que deux tronçons de came adjacents se raccordent avec chevauchement mutuel diagonal.

Comme indiqué plus haut, les dispositions conformes à l'invention trouvent une application préférée, bien que non limitative, dans une installation mobile, notamment tournante, de moulage de récipients, notamment de bouteilles, en polymère thermoplastique tel que le PET, pour l'ouverture et la fermeture des moules portefeuille.

L'invention sera mieux comprise à la lecture de la description détaillée de certains modes de réalisation préférés donnés uniquement à titre d'exemples non limitatifs. Dans cette description, on se réfère aux dessins annexés sur lesquels :
- les figures 3 et 4 sont des vues schématiques partielles analogues à celle de la figure 2 et illustrant respectivement deux modes de réalisation conformes à l'invention ;
- la figure 5 est une vue de dessus, analogue à celle de la figure 1, illustrant un autre mode de réalisation préféré des dispositions de l'invention ; et
- la figure 6 est une vue de côté selon la ligne VI-VI de la figure 5, d'une partie du dispositif de la figure 5.

En se référant tout d'abord à la figure 3, analogue à la figure 2 aux dispositions de l'invention près et sur laquelle on reprend les mêmes références numériques pour désigner les organes identiques, on découple mécaniquement les deux pièces allongées 2 et 3 en montant l'une des pièces (la pièce 2 dans l'exemple illustré) sur l'embase 1 par l'intermédiaire de moyens élastiquement déformables propres à autoriser un déplacement élastique de la surface de came 4 correspondante par rapport à l'autre surface de came 5.

Divers moyens peuvent être mis en oeuvre pour concrétiser cette disposition.

Dans le mode de réalisation préféré plus particulièrement illustré à la figure 3, les moyens élastiquement déformables sont constitués par une semelle 10 en un matériau élastique, tel qu'un élastomère, interposée entre ladite pièce allongée 2 et l'embase 1 sur laquelle l'autre pièce allongée 3 reste montée de façon fixe.

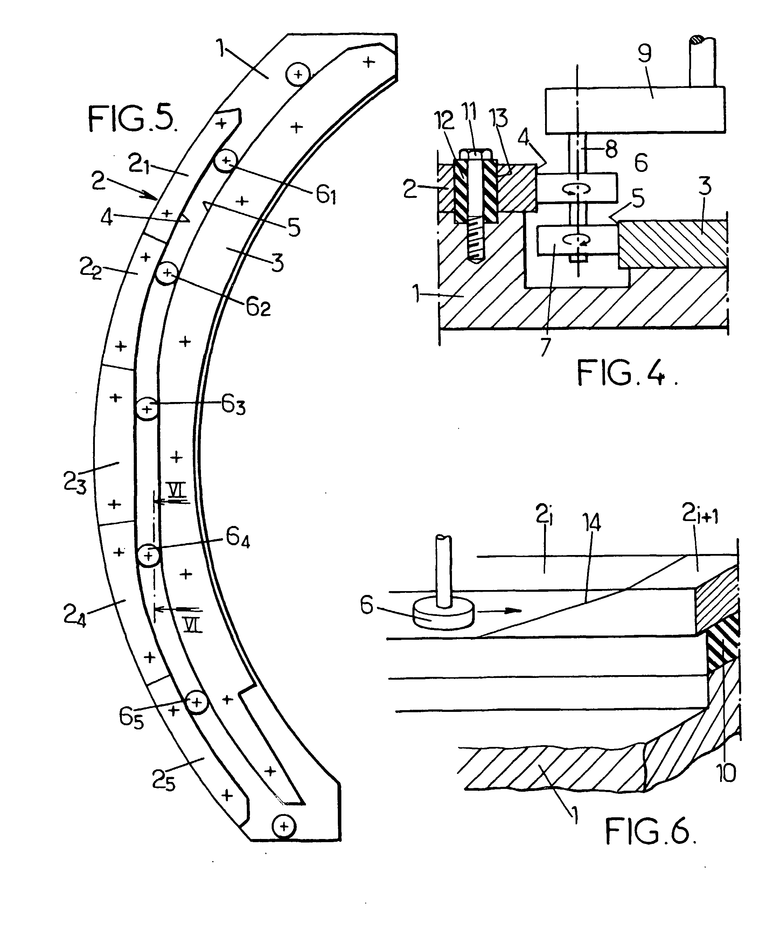

A la figure 4 est illustré un autre mode de réalisation possible selon lequel la pièce allongée 2 est fixée à l'embase 1 par des vis 11 avec interposition d'un manchon 12 élastiquement déformable, par exemple en élastomère, entre la tige de la vis 11 et l'alésage 13 percé dans la pièce 2.

Quelle que soit la solution retenue, la pièce allongée 2 est en mesure de s'effacer latéralement, autrement dit la surface de came 4 est susceptible de s'écarter transversalement de la surface de came 5 située en regard, lorsque le galet 6 lui imprime un effort excessif par exemple en raison d'un rebond.

Toutefois, la solution proposée peut, à elle seule, se révéler insuffisante dans le cas où plusieurs galets successifs sont simultanément engagés au contact de la surface de came 4, car les réactions des divers galets peuvent se combiner et entraîner un phénomène de résonance.

Dans ce cas, il est très avantageux de découpler les zones de contact de la came 4 avec les divers galets successifs. Autrement dit, on tronçonne la pièce allongée 2 en au moins autant de tronçons 2₁, 2₂, ..., 2ₙ de came que le nombre n de galets 6₁, 6₂, ..., 6ₙ susceptibles d'être simultanément au contact de ladite surface de came 4 sur toute la longueur de celle-ci. A la figure 5 est illustré un mode de réalisation ainsi agencé : la surface de came 4 peut être contactée simultanément par cinq galets 6₁ à 6₅ et la pièce allongée 2 est constituée par cinq tronçons 2₁ à 2₅ de came respectivement disposés les uns à la suite des autres. Compte tenu du montage élastique de chaque tronçon 2₁ à 2₅ sur l'embase 1, tout choc ou toute vibration communiquée à un des tronçons de came n'est pas retransmise au(x) tronçon(s) adjacent(s).

De préférence, il est souhaitable que le nombre des tronçons soit supérieur d'au moins une unité au nombre des galets en appui contre la surface de came, afin d'être assuré que chaque tronçon ne reçoive le contact que d'un seul galet.

Dans la configuration qui vient d'être décrite, le montage élastique des tronçons 2₁ à 2₅ de came semble devoir être réalisé de la façon la mieux appropriée en ayant recours à la mise en oeuvre d'une semelle élastique (ou de semelles élastiques respectives) comme illustré à la figure 3 ou de manchons élastiques comme illustré à la figure 4.

Au surplus, pour éviter des chocs lors du passage d'un galet 6 d'une extrémité d'un tronçon 2ᵢ de came sur l'extrémité adjacente du tronçon suivant 2ᵢ₊₁, notamment lorsque l'un est décalé transversalement par rapport à l'autre, on aura de préférence recours à l'agencement illustré à la figure 6 : les deux extrémités adjacentes des tronçons successifs 2ᵢ, 2ᵢ₊₁ ont, non pas des sections droites aboutées, mais des sections en biseaux complémentaires qui s'appuient l'une sur l'autre de manière à former un plan de joint 14 incliné sur l'étendue longitudinale de la came, de telle sorte que le passage d'un galet 6 d'un tronçon 2ᵢ à l'autre 2ᵢ₊₁ est progressif.

## Revendications

1. Dispositif de guidage à came pour la commande d'un mouvement annexe d'un organe (9) par ailleurs entraîné en déplacement continu, ledit dispositif comportant deux cames parallèles (4,5), mutuellement décalées transversalement, avec lesquelles coopèrent respectivement deux galets coaxiaux (6, 7) pour un guidage bilatéral du susdit organe,
**caractérisé en ce qu'**une des cames (4) est montée par l'intermédiaire de moyens élastiquement déformables (10, 12) propres à autoriser un déplacement élastique de ladite came (4) par rapport à l'autre came (5).

2. Dispositif selon la revendication 1,
**caractérisé en ce que** les moyens élastiquement déformables comprennent une semelle (10) en un matériau élastique interposée entre ladite came (4) et une embase de support (1) sur laquelle l'autre came (5) est montée de façon fixe.

3. Dispositif selon la revendication 2,
**caractérisé en ce que** les moyens élastiquement déformables comprennent une semelle (10) en élastomère.

4. Dispositif selon la revendication 2,
**caractérisé en ce que** la came (4) est fixée à une embase de support (1) par des organes de vissage (11) avec interposition de manchons respectifs (12) élastiquement déformables entre lesdits organes de vissage (11) et des alésages respectifs (13) de l'embase (1).

5. Dispositif selon l'une quelconque des revendications 1 à 4, **caractérisé en ce que** ladite came (4) montée élastiquement est constituée sous forme de plusieurs tronçons de came disposés bout à bout, le nombre de ces tronçons étant au moins égal au nombre des galets (6) susceptibles d'être engagés simultanément au contact de ladite came et la longueur des tronçons de came étant choisie, en relation avec l'intervalle séparant des galets successifs, de manière que chaque tronçon de came monté élastiquement ne reçoive l'appui que d'un seul galet (6).

6. Dispositif selon la revendication 5,
**caractérisé en ce que** le nombre des tronçons est supérieur d'au moins une unité au nombre des galets engagés simultanément au contact de la came, ce grâce à quoi chaque tronçon ne reçoit de contact que d'un seul galet.

7. Dispositif selon la revendication 5 ou 6,
**caractérisé en ce que** deux tronçons de came adjacents se raccordent avec chevauchement mutuel diagonal.

8. Installation mobile, notamment tournante, de moulage à moules portefeuille pour la fabrication, par soufflage ou étirage-soufflage, de récipients, notamment de bouteilles, en polyester thermoplastique, notamment en PET, à partir d'une préforme chauffée, ladite installation comportant un dispositif de guidage à cames et galets pour la commande de l'ouverture et de la fermeture desdits moules portefeuille,
**caractérisée en ce que** le dispositif de guidage est agencé selon l'une quelconque des revendications 1 à 7.

## Patentansprüche

1. Steuerkurven-Führungsvorrichtung für die Steuerung einer Zusatzbewegung eines im Übrigen in kontinuierlicher Bewegung angetriebenen Organs (9), wobei diese Vorrichtung zwei parallele, in Querrichtung gegeneinander versetzte Steuerkurven (4, 5) aufweist, mit denen zwei koaxiale Rollen (6, 7) jeweils für eine bilaterale Führung dieses Organs zusammenwirken,
**dadurch gekennzeichnet, dass** eine der Steuerkurven (4) über elastisch verformbare Mittel (10, 12) montiert ist, die geeignet sind, eine elastische Bewegung dieser Steuerkurve (4) bezüglich der anderen Steuerkurve (5) zuzulassen.

2. Vorrichtung nach Anspruch 1, **dadurch gekennzeichnet, dass** die elastisch verformbaren Mittel einen Einsatz (10) aus einem elastischen Werkstoff umfassen, der zwischen die Steuerkurve (4) und einen Tragsockel (1) eingesetzt ist, auf dem die andere Steuerkurve (5) fest montiert ist.

3. Vorrichtung nach Anspruch 2, **dadurch gekennzeichnet, dass** die elastisch verformbaren Mittel einen Einsatz (10) aus Elastomer umfassen.

4. Vorrichtung nach Anspruch 2, **dadurch gekennzeichnet, dass** die Steuerkurve (4) an einem Tragsockel (1) durch Verschraubungsorgane (11) befestigt ist, wobei zwischen die Verschraubungsorgane (11) und jeweilige Bohrungen (13) des Sockels (1) jeweilige elastisch verformbare Buchsen (12) eingesetzt sind.

5. Vorrichtung nach einem der Ansprüche 1 bis 4, **dadurch gekennzeichnet, daß** die elastisch montierte Steuerkurve (4) in Form von mehreren stumpf angeordneten Steuerkurvenabschnitten ausgebildet ist, wobei die Anzahl dieser Abschnitte mindestens gleich der Anzahl der Rollen (6) ist, die gleichzeitig mit dieser Steuerkurve in Kontakt gebracht werden können, und die Länge der Steuerkurvenabschnitte in Relation mit dem aufeinanderfolgende Rollen voneinander trennenden Zwischenraum so gewählt ist, dass jeder elastisch montierte Steuerkurvenabschnitt nur von einer Rolle (6) beaufschlagt wird.

6. Vorrichtung nach Anspruch 5, **dadurch gekennzeichnet, dass** die Anzahl der Abschnitte um mindestens eins größer als die Anzahl der gleichzeitig mit der Steuerkurve in Kontakt gebrachten Rollen ist, wodurch jeder Abschnitt nur mit einer Rolle in Kontakt kommt.

7. Vorrichtung nach Anspruch 5 oder 6, **dadurch gekennzeichnet, dass** zwei benachbarte Steuerkurvenabschnitte mit gegenseitiger diagonaler Überlappung aneinander anschließen.

8. Bewegliche, insbesondere rotierende Formanlage mit Brieftaschen-Formen zur Herstellung von Behältern, insbesondere Flaschen, aus thermoplastischem Polyester, insbesondere aus PET, durch Blasen oder Streckblasen aus einer erhitzten Vorform, wobei diese Anlage eine Führungsvorrichtung mit Steuerkurven und Rollen für die Steuerung der Öffnung und der Schließung der Brieftaschen-Formen aufweist,
**dadurch gekennzeichnet, dass** die Führungsvorrichtung gemäß einem der Ansprüche 1 bis 7 ausgebildet ist.

## Claims

1. A cam-type guiding device for controlling a related movement of a member (9) that is independently driven with a continuous displacement, said device comprising two parallel cams (4, 5), offset transversely from each other, with which two respective coaxial rollers (6, 7) engage for bilateral guidance of said member,
**characterized in that** one of the cams (4) is mounted via elastically deformable means (10, 12) capable of allowing an elastic displacement of said cam (4) relative to the other cam (5).

2. The device as claimed in claim 1, **characterized in that** the elastically deformable means comprise a block (10) of elastic material interposed between said cam (4) and a supporting base (1) on which the other cam (5) is mounted in a fixed manner.

3. The device as claimed in claim 2, **characterized in that** the elastically deformable means comprise a block (10) made of elastomer.

4. The device as claimed in claim 2, **characterized in that** the cam (4) is fixed to a supporting base (1) by threaded members (11) with respective elastically deformable intermediate bushings (12) between said threaded members (11) and respective bores (13) in the base (1).

5. The device as claimed in any one of claims 1 to 4,
**characterized in that** said elastically mounted cam (4) is constructed in the form of several cam lengths arranged end to end, the number of these lengths being equal to or greater than the number of rollers (6) capable of being engaged simultaneously in contact with said cam and the length of the cam lengths being selected, in relation to the interval separating successive rollers, in such a way that each elastically mounted cam length is in contact with only one roller (6).

6. The device as claimed in claim 5, **characterized in that** the number of lengths is at least one greater than the number of rollers engaged simultaneously in contact with the cam, whereby each length is contacted by only one roller.

7. The device as claimed in claim 5 or 6,
**characterized in that** two adjacent cam lengths meet with a mutual diagonal overlap.

8. A moveable, and in particular rotating molding installation with wallet molds for manufacturing, by blow molding or stretch-blow molding, containers, such as bottles, in thermoplastic polyester, such as PET, from a heated preform; said installation comprising a cam and roller-type guiding device for controlling the opening and closing of said wallet molds,
**characterized in that** the guiding device is arranged in accordance with any one of claims 1 to 7.
